# EUROPEAN PATENT SPECIFICATION

(11) **EP 3 036 577 B1**
(45) Date of publication and mention of the grant of the patent: **06.12.2017**
(21) Application number: 14761496.0
(22) Date of filing: 22.08.2014
(51) Int. Cl.: G02B 21/00

(54) **AUTOFOCUS APPARATUS**
AUTOFOKUSVORRICHTUNG
APPAREIL DE MISE AU POINT AUTOMATIQUE

(30) Priority: 22.08.2013 US 201361868881 P
(43) Date of publication of application: 29.06.2016
(73) Proprietor: Thorlabs, Inc., Newton, New Jersey 07860 (US)
(72) Inventor: BROOKER, Jeffrey, S., Newton, NJ 07860 (US)
(74) Representative: Grättinger Möhring von Poschinger Patentanwälte Partnerschaft
(86) International application number: PCT/US2014/052291
(87) International publication number: WO 2015/027153

(56) References cited:
- WO-A1-2012/170275
- US-A1- 2011 090 562
- US-B2- 7 019 309
- Aaron D Aguirre ET AL: "High speed optical coherence microscopy with autofocus adjustment and a miniaturized endoscopic imaging probe References and links", Science J. Invest. Dermatol. Opt. Lett. J. Opt. Soc. Am. A IEEE J. Sel. Top. Quan. Electron. Opt. Lett. J. Biomed. Opt. Rev. Sci. Instrum. Opt. Lett, 17 February 2010 (2010-02-17), pages 1178-1181, XP055150171, Retrieved from the Internet: URL:http://www.ncbi.nlm.nih.gov/pmc/articl es/PMC2908909/pdf/oe-18-5-4222.pdf [retrieved on 2014-10-31]
- LO Y L ET AL: "Fiber type of optical coherence tomography with an auto-focus device", OPTICS COMMUNICATIONS, NORTH-HOLLAND PUBLISHING CO. AMSTERDAM, NL, vol. 259, no. 1, 1 March 2006 (2006-03-01) , pages 70-77, XP028080701, ISSN: 0030-4018, DOI: 10.1016/J.OPTCOM.2005.08.050 [retrieved on 2006-03-01]

## Description

### FIELD OF THE INVENTION

The invention generally relates to a microscopy apparatus, and more particularly to techniques for automatically adjusting the position of a stage for attaining proper focus.

### BACKGROUND

As with all optical systems, microscopes suffer from diminished depth of field as the magnification and the NA (numerical aperture) of the imaging lens (objective) increases. When using a microscope, the user is responsible for attaining proper focus of the sample by moving the sample relative to the objective. When microscopy is automated and the user is no longer involved in looking at each image, a method of auto focusing is required. In the related art, techniques that achieve automatic focus by gauging the distance between the front lens and the bottom of the container (e.g., slide, well plate, etc.) are described. Such techniques are based on reflecting a beam of light off of the first surface and measuring the reflection. The deficiency of such techniques, however, is that if the container that the sample is on has an inconsistent thickness, as in most plastics, then the resulting image can be off in focus the amount of the deviation of the substrate.

Cellular imaging relies on the growth of cells on the bottom of a glass or plastic substrate. The cells grow parallel to the surface and secrete proteins that cause them to adhere to the substrate. In order to maintain the growth of the cells, nutrient rich liquid medium is added to feed the cells and maintain proper physiological conditions. In this scenario, the surface of the plastic is covered in an aqueous solution, which can be used to detect the position of the cells. The index of refraction change between the plastic and the liquid can be located using a low noise, high sensitivity reflected light setup.

### SUMMARY

In an embodiment, an autofocus microscope apparatus is provided. The apparatus includes: a light source; an optical coupler having a first port, second port and a third port; wherein a light signal in the optical coupler travels substantially only from the first port to the second port and from the second port to the third port; wherein the optic coupler couples to the light source at the first port; an optical collimator for directing a light output from the second port of the optical coupler onto a sample through a Dichroic mirror and a microscope objective, wherein the sample is placed on a substrate supported by an adjustable microscopy stage; a scanning means for focusing the light at a plurality of focal points along an axis; a photodiode detector for converting a light signal that includes reflections off of the substrate at the plurality of focal points along the axis, into an intensity signal, wherein the light signal is captured by the microscope objective and sent to the photodiode detector through the Dichroic mirror, the optical collimator, and into the second port and out of the third port of the optic coupler; a memory device for storing a signal template; and a microprocessor for detecting a peak in the intensity signal by cross-correlating the intensity signal with the signal template; wherein the microprocessor generates a command for moving the position of the adjustable microscopy stage along the axis based on a difference between the location of the detected peak in the intensity signal and the location of a peak in a reference signal.

In another embodiment, a method for operating a microscopy apparatus is provided. The method includes: coupling an optical coupler to a light signal output of a light source at a first port, to an optical collimator at a second port, and to a photodiode detector at the third port, wherein the light signal in the optical coupler travels substantially only from the first port to the second port and from the second port to the third port; directing a light beam from the second port of the optical coupler onto a sample by the light collimator through a Dichroic mirror and a microscope objective, wherein the sample is placed on a substrate supported by an adjustable microscopy stage; focusing the light beam at a plurality of focal points along an axis; capturing a reflected light signal that includes reflections of the light beam off of the substrate at the plurality of focal points along the axis by the microscope objective and sending to the photodiode detector through the optical collimator and into the second port and out of the third port of the optic coupler; detecting a peak in the intensity signal by correlating the intensity signal with a stored signal template; and generating a command for moving the position of the adjustable microscopy stage along the axis based on a difference between the location of the detected peak in the intensity signal and the location of a peak in a reference signal.

### BRIEF DESCRIPTION OF THE DRAWINGS

Fig. 1 is a diagram of expected signal levels for reflections from various surface boundaries.
Fig. 2 is a diagram of an autofocus apparatus according to an embodiment.
Fig. 3 is a diagram of cross-correlation for tracking reflection peak according to an embodiment.
Fig. 4 is a diagram of an autofocus apparatus according to an embodiment.
Fig. 5 is a diagram of an autofocus apparatus according to an embodiment.
Fig. 6 is a diagram of an autofocus apparatus according to an embodiment.
Fig. 7 is a diagram of an autofocus apparatus according to an embodiment.
Fig. 8 is a diagram of an autofocus apparatus according to an embodiment.

### DETAILED DESCRIPTION OF THE PREFERRED EMBODIMENTS

This disclosure describes the best mode or modes of practicing the invention as presently contemplated. This description is not intended to be understood in a limiting sense, but provides an example of the invention presented solely for illustrative purposes by reference to the accompanying drawings to advise one of ordinary skill in the art of the advantages and construction of the invention. In the various views of the drawings, like reference characters designate like or similar parts. It is to be noted that all fiber optic systems can be replaced with free space equivalents.

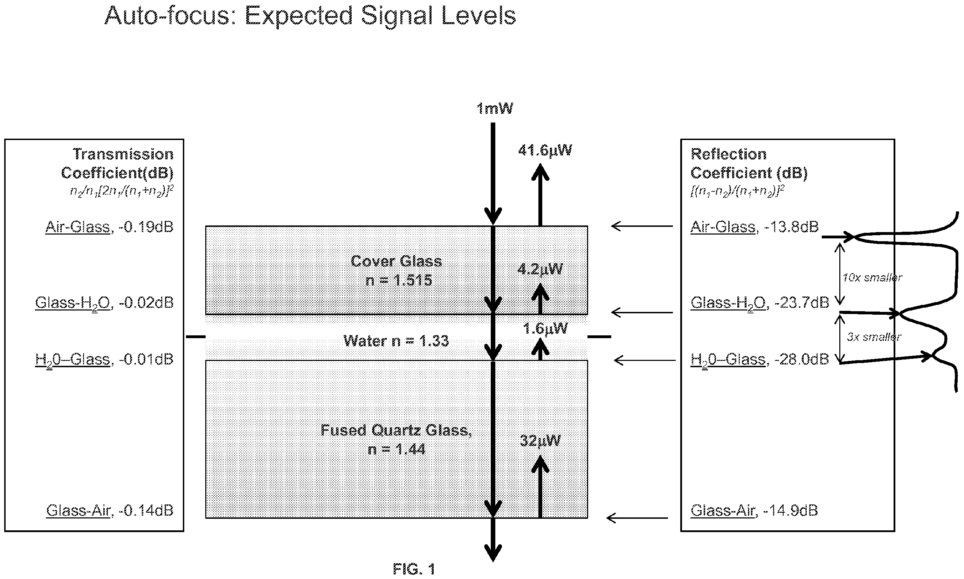

In microscopy, a sample object to be examined is placed on a slide and is cover by a slip cover. The objective of a microscope is adjusted so that a focused view of the magnified object is obtained. When light traveling in a first medium having a first refractive index enters into a second medium having a second reflective index, reflection occurs at the boundary between the two media. The amount of light that gets reflected and the amount of light that gets transmitted at the boundary depend on the refractive indices of the two media. In microscopy, there are typically many different boundaries, e.g. air-glass, glass-water, waterglass, and glass-air, and thus there are different reflection intensity levels corresponding to these boundaries. Fig. 1 shows an example of intensity levels of reflections at the various boundaries when light is focused on these boundary locations. By scanning the reflection intensities at these various point along an axis (without loss of generality, hereinafter referred to as the z-axis), a z-axis reflection profile can be obtained. In a z-axis reflection profile, the various intensity peaks correspond to the various medium boundaries. Therefore, using the z-axis reflection profile, one can adjust the microscope's objective to a position of an intensity level peak that best correlates to the desired optical focus.

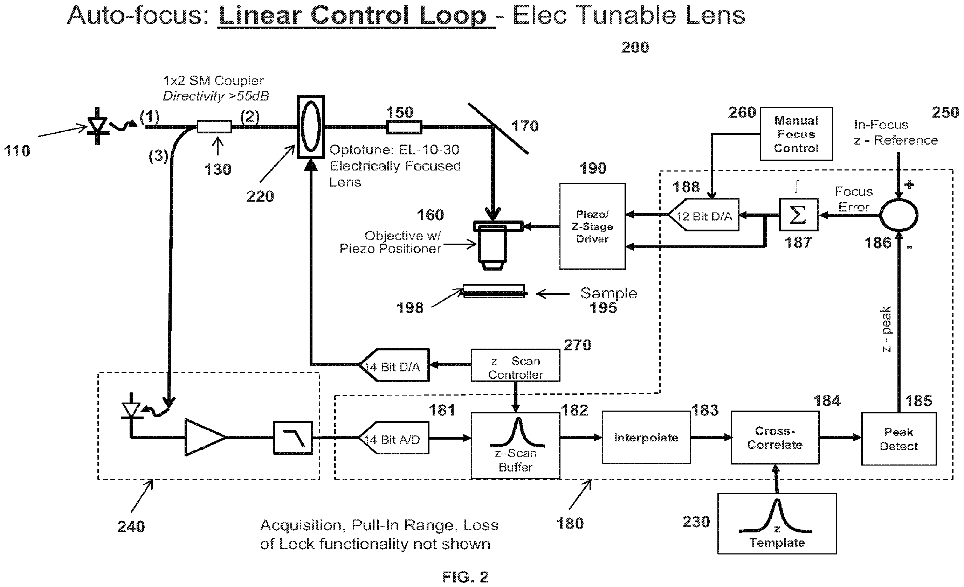

Fig. 2 shows an exemplary diagram of an autofocus apparatus 200 implemented in accordance with an embodiment. In one embodiment of the invention the wavelength of the light source 110 is a 1310nm. Other values are contemplated. The optical coupler 130 comprises a first port (1), a second port (2) and a third port (3). The light travels in the optical coupler 130 and outputs at the second port (2), where the light signal is collimated into a beam by the collimator 150. It should be noted that a light signal can travel in the optical coupler 130 substantially only from the first port (1) to the second port (2) and to third port (3). In one embodiment, the directivity of the optical coupler is at least 55 dB.

The beam reflects off of a Dichroic mirror 170, which is designed to only reflect wavelengths above a predefined wavelength and pass anything below. In an exemplary embodiment the predefined wavelength is 1300nm. The light beam travels through the microscope objective 160 and is focused on the sample 195 placed on an adjustable microscopy stage 198. The light reflects off of the plastic or glass substrate that the sample 195 is placed on, is captured by the objective 160, and then sent back into the fiber by the collimator 150. If the sample 195 is not contained in a glass or plastic substrate, the reflection can come from the sample 195 itself.

The light signal from the collimator 150 is input into the optical coupler 130 at the second port (2) and is output at the third port (3), as the light travels substantially only in one direction through the circulator 130. The output from the optical coupler 130 is fed into the photodiode detector 240. The photodiode detector 240 converts the light signal into a voltage signal output or an intensity signal output.

In one embodiment, the z-scan controller 270 adjusts the electrically focused lens 220 to focus the light at various focal points along the z-axis to obtain the scan data of the reflected light signal.

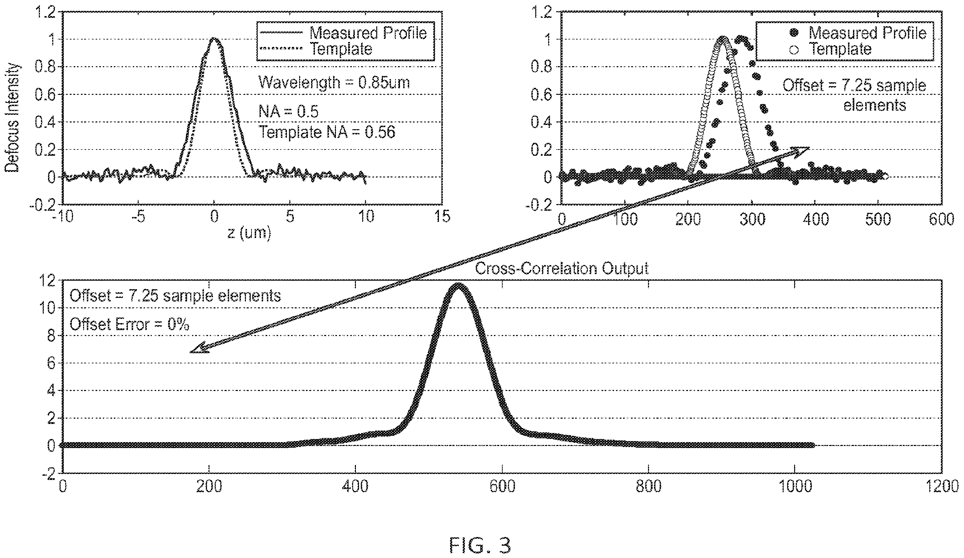

In one embodiment, the microprocessor 180 includes different processing module, e.g., an A/D converter 181 that converts the analog intensity level signal into a digital signal, a z-scan buffer 182 that holds the digitized scanned data, an interpolator that interpolate the data, a cross-correlator 184 to cross-correlate the interpolated data with a template stored in 230, a peak detector 185 that detects one or more peaks using the results of the cross-correlation, a comparator 186 to determine a shift with respect to an in-focus z-reference signal, an integrator 187 to calculate the shift, and a D/A converter 188 to convert the shift value into a command signal to drive the Piezo stage 190. These modules may be implemented in one or more microprocessors, and with combinations of hardware and/or software components. Alternatively, one or more of these modules can have their own microprocessors. The microprocessor 180 processes the intensity level signal to produce a z-axis scan profile, and cross-correlated with a template stored in a memory device 230 in order to detect one or more peaks in the z-axis scan profile. The use of cross-correlation with a template allows rapid and accurate detection of peaks. Fig. 3 shows the use of a cross-relation of the z-axis profile with a template to accurately locate the center of the peak, even in the presence of noise.

Once a particular peak is detected, the location of the peak is compared with the corresponding peak in an in-focus z-reference signal 250. The in-focus z-reference signal contains a peak that corresponds to a desired focus location selected by the user or automatically determined by the system. Furthermore, the location of the peak may be compared with a corresponding peak in a z-reference signal for moving to a specific location around the peak. In addition, a manual focus control 260 is available for users to select and/or adjust the desired focus location.

It is contemplated that the system may lose focus of the sample, for example: the position of the sample may change over time. When the system is out of focus by a small distance, the z-axis scan profile obtained would be shifted by that small distance relative to a previously obtained in-focus z-axis scan profile. Thus the system can be brought back to focus by shifting the adjustable stage by the distance shifted in the z-axis scan profile.

In an embodiment of the present invention, the system can be realized as a tracking device. Using the principles of the present invention, the tracking device can maintain a specific distance between the device and the sample by tracking a particular peak in the intensity level signal and continuously adjusting the z-position by correlating intensity level signal with a stored profile. When the position of the sample 195 changes, the reflected light signal received the photodiode detector 240 changes. As a result, microprocessor 180 detects a change in the intensity level signal the photodiode detector 240, and detects a change of position of the peak in the intensity level signal by correlating the intensity level signal with a stored profile. Microprocessor 180 generates a corresponding movement command in order to compensate the shift, and thus maintains the same distance between the objective 160 and the sample 195.

To obtain a z-axis reflection profile, light is focused on various points along the z-axis by a scanning means. It is contemplated that the z-axis intensity profile scan can be accomplished by some fast scanning techniques. In confocal microscopy, a spatial pinhole to eliminate out-of-focus light. Therefore by continuously modulating and adjusting the spatial pinhole, a scan of various focal planes can be achieved.

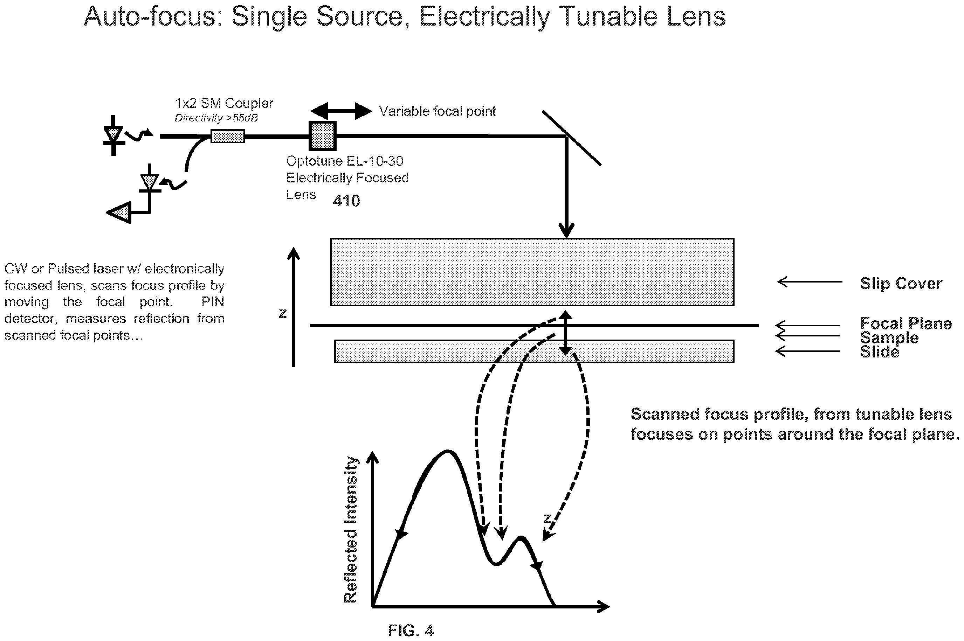

Fig. 4 shows an embodiment in which an electrically focused lens 410 in used to scan various points along the z-axis and the intensity levels of the reflections at these various points are recorded. Typically the time to complete a z-axis scan is relatively small compare to, for example, the time course of change of intensity of the light source, or a movement of the sample.

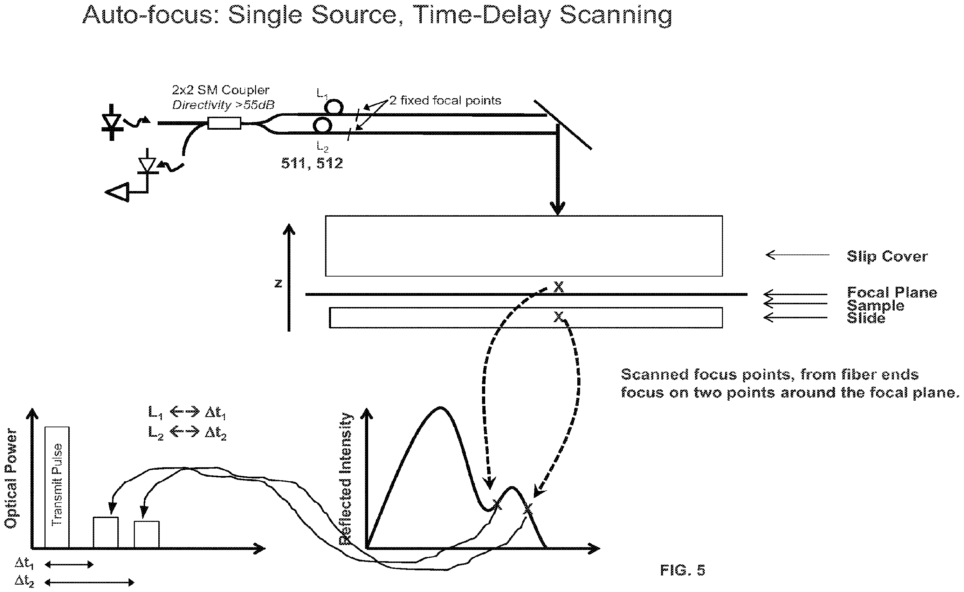

Fig. 5 shows an embodiment, in which the output of the optical coupler is split into two paths. Discrete transmission delays for fiber lengths L1 and L2 (511 - 512) create a time-division multiplexed measurement of reflected power at each of the two fixed focal points. The two focal points include one point on each side the focal plane. The measured optical power over these two discrete time points can be mapped to the reflected intensity profile.

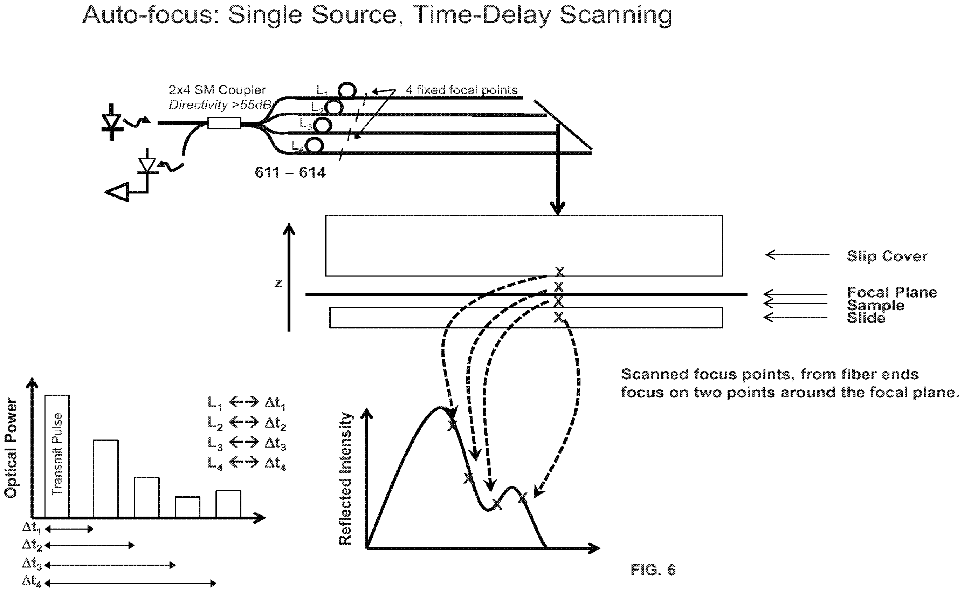

Fig. 6 shows an embodiment, in which the output of the optical coupler is split into four paths. Discrete transmission delays for fiber lengths L1, L2, L3 and L4 (611 - 614) create a time-division multiplexed measurement of reflected power at each of the four fixed focal points. The four focal points include two points on each side the focal plane. The measured optical power over these four discrete time points can be mapped to the reflected intensity profile. The optical coupler and the photodiode detector are not shown for simplicity.

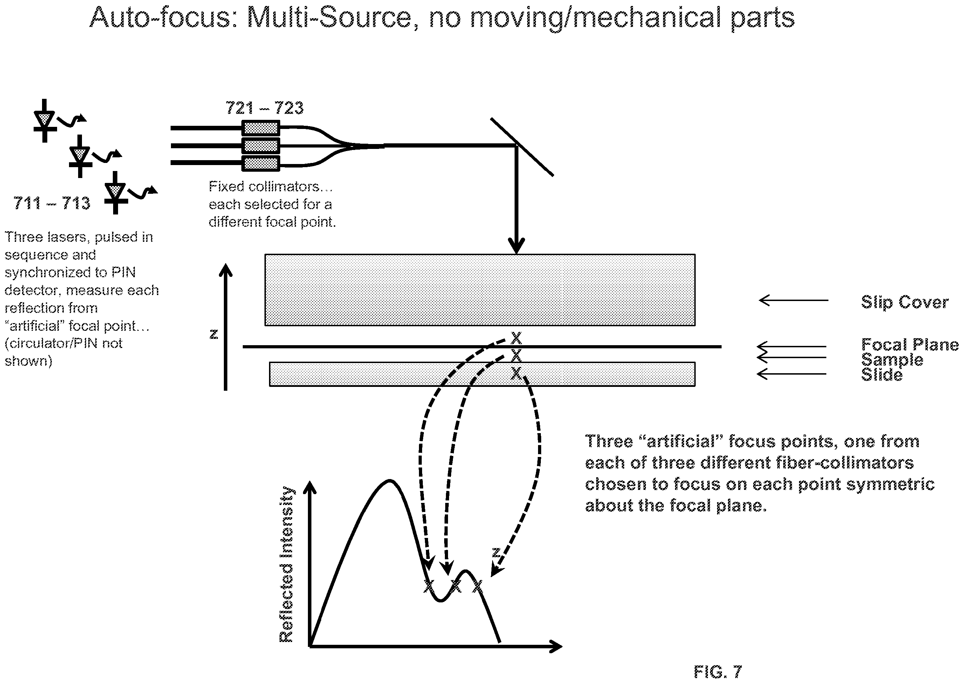

Fig. 7 shows an embodiment, in which three lasers 711 - 713 are pulsed in sequence and synchronized with the photodiode detector for obtaining the z-axis profile scan. Three fixed collimators 721 - 723, each selected for a different focal point is coupled the three lasers respectively. Three "artificial" focus points, one from each of three different fiber-collimators, are chosen to focus on each point symmetric about the focal plane. The optical coupler and the photodiode detector are not shown for simplicity.

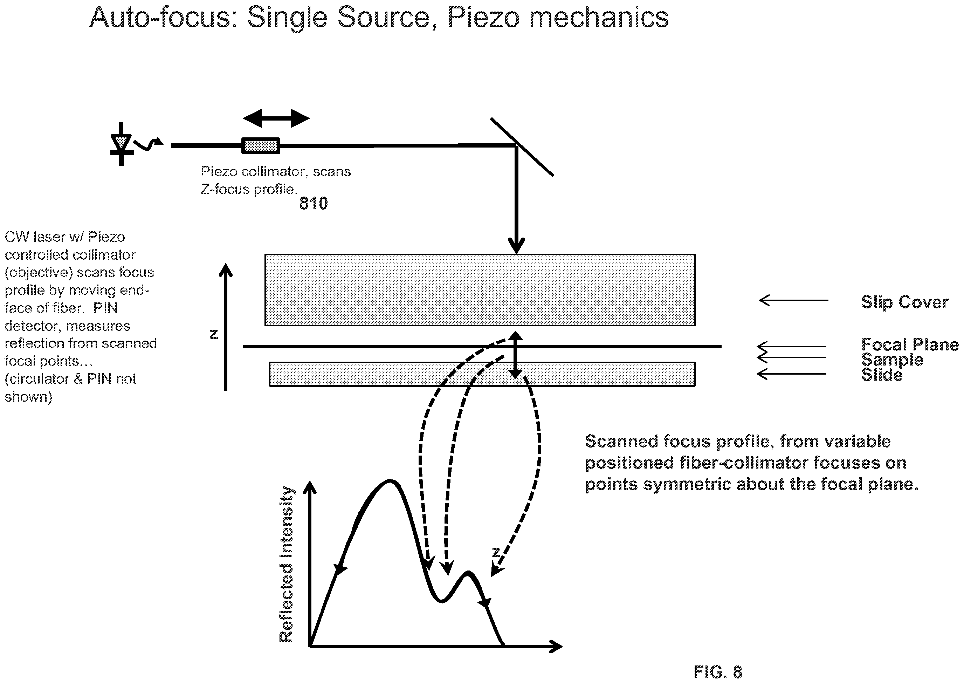

Fig. 8 shows an embodiment, in which a Piezo controlled collimator 810 is used to scan the z-axis profile by moving the end face of the fiber. The Piezo controlled collimator produces a variable fiber-collimator position and thus focuses on various points symmetric about the focal plane. The optical coupler and the photodiode detector are not shown for simplicity.

## Claims

1. An autofocus apparatus, comprising:
a light source (110);
an optical coupler (130) having a first port, second port and a third port; wherein a light signal in the optical coupler travels substantially only from the first port to the second port and from the second port to the third port; wherein the optic coupler couples to the light source at the first port;
an optical collimator (150) for directing a light output from the second port of the optical coupler onto a sample (195) through a Dichroic mirror (170) and a microscope objective (160), wherein the sample (195) is placed on a substrate supported by an adjustable microscopy stage (198);
a scanning means (270) for focusing the light at a plurality of focal points along an axis;
a photodiode detector (240) for converting a light signal that comprises reflections off of the substrate at the plurality of focal points along the axis, into an intensity signal, wherein the light signal is captured by the microscope objective (160) and sent to the photodiode detector (240) through the Dichroic mirror (170), the optical collimator (150), and into the second port and out of the third port of the optic coupler (130);
a memory device (230) for storing a signal template; and
a microprocessor (180) for detecting a peak in the intensity signal by cross-correlating the intensity signal with the signal template;
wherein the microprocessor (180) is configured to generate a command for moving the position of the adjustable microscopy stage (198) along the axis based on a difference between the location of the detected peak in the intensity signal and the location of a peak in a reference signal.

2. The apparatus of claim 1, wherein the microprocessor is configured to continuously detect the peak in the intensity signal and generate the command moving the position of the adjustable microscopy stage along the axis to maintain a desired optical focus based on the difference between the location of the detected peak in the intensity signal and the location of a peak in a reference signal.

3. The apparatus of claim 1, wherein the scanning means comprises an electrically focused lens and a controller for adjusting the focus of the electrically focused lens.

4. The apparatus of claim 1, wherein the scanning means comprises a plurality of lengths of fiber having different transmission delays.

5. The apparatus of claim 1, wherein the scanning means comprises a plurality of lasers and a corresponding fixed collimator corresponding to each of the plurality of lasers for a different focal point.

6. The apparatus of claim 1, wherein the scanning means comprises a piezo collimator.

7. The apparatus of claim 1, wherein the optical coupler comprises a fiber optic circulator.

8. The apparatus of claim 1, wherein the optical coupler comprises an optical isolator.

9. A method for automatically operating an autofocus apparatus, the method comprising:
coupling an optical coupler to a light signal output of a light source at a first port, to an optical collimator at a second port, and to a photodiode detector at the third port, wherein the light signal in the optical coupler travels substantially only from the first port to the second port and from the second port to the third port;
directing a light beam from the second port of the optical coupler onto a sample by the light collimator through a Dichroic mirror and a microscope objective, wherein the sample is placed on a substrate supported by an adjustable microscopy stage;
focusing the light beam at a plurality of focal points along an axis;
capturing a reflected light signal that comprises reflections of the light beam off of the substrate at the plurality of focal points along the axis by the microscope objective and sending to the photodiode detector through the optical collimator and into the second port and out of the third port of the optic coupler;
converting the reflected light signal into an intensity signal by the photodiode detector; and
detecting a peak in the intensity signal by correlating the intensity signal with a stored signal template; and
generating a command for moving the position of the adjustable microscopy stage along the axis based on a difference between the location of the detected peak in the intensity signal and the location of a peak in a reference signal.

10. The method of claim 9, further comprising continuously detecting the peak in the intensity signal and generating the command moving the position of the adjustable microscopy stage along the axis to maintain a desired optical focus based on the difference between the location of the detected peak in the intensity signal and the location of a peak in a reference signal.

11. The method of claim 9, wherein the focusing the light beam at a plurality of focal points along the axis comprises electrically controlling a tunable lens.

12. The method of claim 9, wherein the focusing the light beam at a plurality of focal points along the axis comprises using a pulsed laser and a plurality of lengths of fiber having different transmission delays.

13. The method of claim 9, wherein the focusing the light beam at a plurality of focal points along the axis comprises using a corresponding fixed collimator corresponding to each of the plurality of lasers for a different focal point.

14. The method of claim 9, wherein the focusing the light beam at a plurality of focal points along the axis comprises controlling a piezo collimator.

## Patentansprüche

1. Autofokusvorrichtung, umfassend:
eine Lichtquelle (110);
einen optischen Koppler (130) mit einem ersten Anschluss, einem zweiten Anschluss und einem dritten Anschluss; wobei ein Lichtsignal in dem optischen Koppler im Wesentlichen nur von dem ersten Anschluss zu dem zweiten Anschluss und von dem zweiten Anschluss zu dem dritten Anschluss läuft; wobei der optische Koppler an die Lichtquelle an dem ersten Anschluss ankoppelt;
einen optischen Kollimator (150) zum Lenken eines Lichtausgangs von dem zweiten Anschluss des optischen Kopplers durch einen dichroitischen Spiegel (170) und ein Mikroskopobjektiv (160) auf eine Probe (195), wobei die Probe (195) auf einem Substrat platziert ist, das von einem verstellbaren Mikroskopieobjekttisch (198) gehalten wird;
ein Abtastmittel (270) zum Fokussieren des Lichts an einer Vielzahl Brennpunkte entlang einer Achse;
einen Photodiodendetektor (240) zum Umwandeln eines Lichtsignals, das Reflexionen von dem Substrat an der Vielzahl Brennpunkte entlang der Achse umfasst, in ein Intensitätssignal, wobei das Lichtsignal von dem Mikroskopobjektiv (160) erfasst und durch den dichroitischen Spiegel (170), den optischen Kollimator (150) und hinein in den zweiten Anschluss und heraus aus dem dritten Anschluss des optischen Kopplers (130) an den Photodiodendetektor (240) gesendet wird;
eine Speichereinrichtung (230) zum Speichern einer Signalschablone; und
einen Mikroprozessor (180) zum Erkennen einer Spitze in dem Intensitätssignal durch Kreuzkorrelieren des Intensitätssignals mit der Signalschablone;
wobei der Mikroprozessor (180) dazu eingerichtet ist, basierend auf einer Differenz zwischen dem Ort der erkannten Spitze in dem Intensitätssignal und dem Ort einer Spitze in einem Referenzsignal einen Befehl zum Bewegen der Position des verstellbaren Mikroskopieobjekttischs (198) entlang der Achse zu generieren.

2. Vorrichtung nach Anspruch 1, wobei der Mikroprozessor dazu eingerichtet ist, kontinuierlich die Spitze in dem Intensitätssignal zu erkennen und basierend auf der Differenz zwischen dem Ort der erkannten Spitze im Intensitätssignal und dem Ort einer Spitze in einem Referenzsignal den Befehl zum Bewegen der Position des verstellbaren Mikroskopieobjekttischs entlang der Achse zu generieren, um einen gewünschten optischen Fokus beizubehalten.

3. Vorrichtung nach Anspruch 1, wobei das Abtastmittel eine elektrisch fokussierte Linse und eine Steuereinrichtung zum Verstellen des Fokus der elektrisch fokussierten Linse umfasst.

4. Vorrichtung nach Anspruch 1, wobei das Abtastmittel eine Vielzahl Längen von Faser mit unterschiedlichen Übertragungsverzögerungen umfasst.

5. Vorrichtung nach Anspruch 1, wobei das Abtastmittel eine Vielzahl Laser und einen entsprechenden fixierten Kollimator umfasst, welcher jedem aus der Vielzahl Laser für einen unterschiedlichen Brennpunkt entspricht.

6. Vorrichtung nach Anspruch 1, wobei das Abtastmittel einen Piezokollimator umfasst.

7. Vorrichtung nach Anspruch 1, wobei der optische Koppler einen faseroptischen Zirkulator umfasst.

8. Vorrichtung nach Anspruch 1, wobei der optische Koppler einen optischen Isolator umfasst.

9. Verfahren zum automatischen Betätigen einer Autofokusvorrichtung, das Verfahren umfassend:
eine Lichtquelle (110);
Koppeln eines optischen Kopplers an einen Lichtsignalausgang einer Lichtquelle an einem ersten Anschluss, an einen optischen Kollimator an einem zweiten Anschluss und an einen Photodiodendetektor an dem dritten Anschluss, wobei das Lichtsignal in dem optischen Koppler im Wesentlichen nur von dem ersten Anschluss zu dem zweiten Anschluss und von dem zweiten Anschluss zu dem dritten Anschluss läuft;
Lenken eines Lichtstrahls von dem zweiten Anschluss des optischen Kopplers durch einen dichroitischen Spiegel und ein Mikroskopobjektiv auf eine Probe mittels des Lichtkollimators, wobei die Probe (195) auf einem Substrat platziert ist, das von einem verstellbaren Mikroskopieobjekttisch gehalten wird;
Fokussieren des Lichtstrahls an einer Vielzahl Brennpunkte entlang einer Achse;
Erfassen eines reflektierten Lichtsignals, das Reflexionen des Lichtstrahls von dem Substrat an der Vielzahl Brennpunkte entlang der Achse umfasst, durch das Mikroskopobjektiv und Senden durch den optischen Kollimator und hinein in den zweiten Anschluss und heraus aus dem dritten Anschluss des optischen Kopplers an den Photodiodendetektor;
Umwandeln des reflektierten Lichtsignals in ein Intensitätssignal durch den Photodiodendetektor; und
Erkennen einer Spitze in dem Intensitätssignal durch Korrelieren des Intensitätssignals mit einer gespeicherten Signalschablone;
Generieren, basierend auf einer Differenz zwischen dem Ort der erkannten Spitze in dem Intensitätssignal und dem Ort einer Spitze in einem Referenzsignal, eines Befehls zum Bewegen der Position des verstellbaren Mikroskopieobjekttischs entlang der Achse.

10. Verfahren nach Anspruch 9, ferner umfassend kontinuierliches Erkennen der Spitze in dem Intensitätssignal und Generieren, basierend auf der Differenz zwischen dem Ort der erkannten Spitze im Intensitätssignal und dem Ort einer Spitze in einem Referenzsignal des Befehls zum Bewegen der Position des verstellbaren Mikroskopieobjekttischs entlang der Achse, um einen gewünschten optischen Fokus beizubehalten.

11. Verfahren nach Anspruch 9, wobei das Fokussieren des Lichtstrahls an einer Vielzahl Brennpunkte entlang der Achse ein elektrisches Steuern einer justierbaren Linse umfasst.

12. Verfahren nach Anspruch 9, wobei das Fokussieren des Lichtstrahls an einer Vielzahl Brennpunkte entlang der Achse ein Benutzen eines gepulsten Lasers und einer Vielzahl Längen von Faser mit unterschiedlichen Übertragungsverzögerungen umfasst.

13. Verfahren nach Anspruch 9, wobei das Fokussieren des Lichtstrahls an einer Vielzahl Brennpunkte entlang der Achse ein Benutzen eines entsprechenden fixierten Kollimators umfasst, welcher jedem aus der Vielzahl Laser für einen unterschiedlichen Brennpunkt entspricht.

14. Vorrichtung nach Anspruch 9, wobei das Fokussieren des Lichtstrahls an einer Vielzahl Brennpunkte entlang der Achse ein Steuern eines Piezokollimators umfasst.

## Revendications

1. Dispositif de mise au point automatique, comprenant :
une source lumineuse (110) ;
un coupleur optique (130) ayant un premier port, second port et un troisième port ; dans lequel un signal lumineux dans le coupleur optique circule substantiellement seulement du premier port au second port et du second port au troisième port ; dans lequel le coupleur optique se couple à la source lumineuse au niveau du premier port ;
un collimateur optique (150) pour diriger une lumière sortie du second port du coupleur optique sur un échantillon (195) à travers un miroir dichroïque (170) et un objectif de microscope (160), dans lequel l'échantillon (195) est placé sur un substrat soutenu par un étage de microscopie ajustable (198) ;
un moyen de balayage (270) pour focaliser la lumière au niveau d'une pluralité de points focaux le long d'un axe ;
un détecteur de photodiode (240) pour convertir un signal lumineux qui comprend des reflets du substrat au niveau de la pluralité de points focaux le long de l'axe, en un signal d'intensité, dans lequel le signal lumineux est capturé par l'objectif de microscope (160) et envoyé au détecteur de photodiode (240) à travers le miroir dichroïque (170), le collimateur optique (150) et dans le second port et hors du troisième port du coupleur optique (130) ;
un dispositif de mémoire (230) pour mémoriser un modèle de signal ; et
un microprocesseur (180) pour détecter un pic d'intensité de signal par corrélation croisée du signal d'intensité avec le modèle de signal ;
dans lequel le microprocesseur (180) est configuré pour générer une commande pour déplacer la position de l'étage de microscopie ajustable (180) le long de l'axe sur la base d'une différence entre l'emplacement du pic détecté dans le signal d'intensité et l'emplacement d'un pic dans un signal de référence.

2. Dispositif selon la revendication 1, dans lequel le microprocesseur est configuré pour détecter en continu le pic dans le signal d'intensité et générer la commande en déplaçant la position de l'étage de microscopie ajustable le long de l'axe pour conserver une mise au point optique désirée sur la base de la différence entre l'emplacement du pic détecté dans le signal d'intensité et l'emplacement d'un pic dans un signal de référence.

3. Dispositif selon la revendication 1, dans lequel le moyen de balayage comprend une lentille mise au point électriquement et un contrôleur pour ajuster la mise au point de la lentille mise au point électriquement.

4. Dispositif selon la revendication 1, dans lequel le moyen de balayage comprend une pluralité de longueurs de fibre ayant des retards de transmission différents.

5. Dispositif selon la revendication 1, dans lequel le moyen de balayage comprend une pluralité de lasers et un collimateur fixe correspondant à chacun de la pluralité de lasers pour un pont focal différent.

6. Dispositif selon la revendication 1, dans lequel le moyen de balayage comprend un collimateur piézo.

7. Dispositif selon la revendication 1, dans lequel le coupleur optique comprend un circulateur à fibre optique.

8. Dispositif selon la revendication 1, dans lequel le coupleur optique comprend un isolateur optique.

9. Procédé de fonctionnement automatique d'un dispositif de mise au point automatique, le procédé comprenant de :
coupler un coupleur optique à une sortie de signal lumineux d'une source lumineuse au niveau d'un premier port, à un collimateur optique au niveau d'un second port, et à un détecteur de photodiode au niveau du troisième port, dans lequel le signal lumineux dans le coupleur optique circule substantiellement seulement du premier port au second port et du second port au troisième port ;
diriger un faisceau lumineux du second port du coupleur optique sur un échantillon par le collimateur de lumière à travers un miroir dichroïque et un objectif de microscope, dans lequel l'échantillon est placé sur un substrat soutenu par un étage de microscopie ajustable;
mettre au point le faisceau lumineux au niveau d'une pluralité de points focaux le long d'un axe ;
capturer un signal lumineux réfléchi qui comprend des reflets du faisceau lumineux du substrat au niveau de la pluralité de points focaux le long de l'axe par l'objectif de microscope et envoyer au détecteur de photodiode à travers le collimateur otique et dans le second port et hors du troisième port du coupleur optique ;
convertir le signal lumineux réfléchi en un signal d'intensité par le détecteur de photodiode ; et
détecter un pic dans le signal d'intensité en corrélant le signal d'intensité avec un modèle de signal mémorisé ; et
générer une commande pour déplacer la position de l'étape de microscopie ajustable le long de l'axe sur la base d'une différence entre l'emplacement du pic détecté dans le signal d'intensité et l'emplacement d'un pic dans un signal de référence.

10. Procédé selon la revendication 9, comprenant en outre de détecter en continu le pic dans le signal d'intensité et générer la commande déplaçant la position de l'étage de microscopie ajustable le long de l'axe sur la base d'une différence entre l'emplacement du pic détecté dans le signal d'intensité et l'emplacement d'un pic dans un signal de référence.

11. Procédé selon la revendication 9, dans lequel la mise au point du faisceau lumineux au niveau d'une pluralité de points focaux le long de l'axe comprend de commander électriquement une lentille accordable.

12. Procédé selon la revendication 9, dans lequel la mise au point du faisceau lumineux au niveau d'une pluralité de points focaux le long de l'axe comprend d'utiliser un laser pulsé et une pluralité de longueurs de fibre ayant des délais de transmission différents.

13. Procédé selon la revendication 9, dans lequel la mise au point du faisceau lumineux au niveau d'une pluralité de points focaux le long de l'axe comprend d'utiliser un collimateur fixe correspondant à chacun de la pluralité de lasers pour un point focal différent.

14. Procédé selon la revendication 9, dans lequel la mise au point du faisceau lumineux au niveau d'une pluralité de points focaux le long de l'axe comprend de commander un collimateur piézo.
